# EUROPÄISCHE PATENTSCHRIFT

(11) **EP 1 259 407 B1**
(45) Veröffentlichungstag und Bekanntmachung des Hinweises auf die Patenterteilung: **07.06.2006**
(21) Anmeldenummer: 00979616.0
(22) Anmeldetag: 22.11.2000
(51) Int. Cl.: B60T 8/00

(54) **HYDRAULIKBLOCK MIT DARAN BEFESTIGTEM ANBAUTEIL**
HYDRAULIC BLOCK WITH AN ADD-ON PIECE SECURED THERETO
BLOC HYDRAULIQUE DOTE D'UNE PIECE RAPPORTEE FIXEE SUR LEDIT BLOC

(30) Priorität: 27.11.1999 DE 19957192; 16.10.2000 DE 10051126
(43) Veröffentlichungstag der Anmeldung: 27.11.2002
(73) Patentinhaber: Continental Teves AG & Co. oHG, 60488 Frankfurt (DE)
(72) Erfinder: BECK, Erhard, 35781 Weilburg (DE); HINZ, Axel, 61267 Neu-Anspach (DE); REINARTZ, Hans-Dieter, 60439 Frankfurt/M (DE); VOGEL, Günther, 63303 Dreieich (DE); HOFFMANN, Peter, 60437 Frankfurt (DE); VIERING, Matthias, 64289 Darmstadt (DE)
(86) Internationale Anmeldenummer: PCT/EP2000/011612
(87) Internationale Veröffentlichungsnummer: WO 2001/039571

(56) Entgegenhaltungen:
- DE-A- 4 104 804
- DE-A- 4 107 625
- DE-A- 4 404 273
- DE-A- 4 441 976
- US-A- 5 449 227

## Beschreibung

Die vorliegende Erfindung betrifft einen Hydraulikblock, insbesondere Ventilblock einer schlupfgeregelten Bremsanlage eines Fahrzeuges, gemäß dem Oberbegriff des Patentanspruchs 1. Ferner betrifft die vorliegende Erfindung ein Verfahren gemäß dem Oberbegriff des Patentanspruchs 14.

Aus dem Stand der Technik ist es bekannt, Anbauteile an einen Hydraulikblock einer hydraulischen Regeleinheit (HCU) mittels Schraubverbindungen zu befestigen. Derartige kraftschlüssige Schraubbefestigungen besitzen jedoch den Nachteil, daß zusätzliche Maßnahmen erforderlich sind, welche einem selbständigen Lösen der Schrauben entgegenwirken. Dies gilt insbesondere, wenn die Schrauben nur kurze Klemmlängen besitzen.

Aus der gattungsgemäßen Schrift DE 41 04 804 A1 ist es ferner bekannt, Magnetventile mittels Verstemmen formschlüssig mit einem Hydraulikblock zu verbinden. Da erfolgt die Verstemmung rundum, d.h. am gesamten Umfang des Anbauteils. Dies ist einerseits kostenintensiv und erfordert andererseits eine Bohrung im Hydraulikblock, in die das Anbauteil bzw. hier Magnetventil eingesetzt werden kann. Damit zu verstemmendes Material vorhanden ist, muß der Hydraulikblock entsprechend dicker ausgeführt sein, was neben der Bauvolumenvergrößerung auch zu einer Erhöhung des Gewichts des Hydraulikblocks führt.

Die JP 11091527 A zeigt einen Hydraulikblock mit einer Ringnut, in die ein Rand eines Motorgehäuse eingeschoben ist. Es ist eine ringförmige Verstemmung vorgesehen. Zu diesem Zweck ist ein Rand der Ringnut auf den Rand des Motorgehäuse niedergestemmt.

Die Aufgabe der vorliegenden Erfindung besteht daher darin, die Nachteile des Standes der Technik zu vermeiden, und ei-ne Verbindung eines Hydraulikblocks mit einem oder mehreren Anbauteilen derart auszubilden, daß diese Verbindung besonders einfach, kostengünstig, kleinbauend und sicher ist.

Diese Aufgabe wird bei einem Ventilblock und einem Verfahren der eingangs genannten Art durch die im Patentanspruch 1 bzw. 14 angegebenen Merkmale gelöst.

Ein besonderer Vorteil der vorliegenden Erfindung besteht darin, daß wenn die Befestigung des Anbauteils an einem oder mehreren einzelnen Verbindungspunkten vorgesehen ist, man auf die aufwendige Rundumverstemmung verzichten kann. Weiterhin ist kein rundum vorhandenes Material erforderlich, so daß der Hydraulikblock kleinbauender und leichter gestaltet sein kann. Im Gegensatz zur Rundumverstemmung ist die Befestigung an einzelnen Verbindungspunkten außerdem einfacher und kostengünstiger.

Vorteilhafterweise ist das Anbauteil insbesondere ein Elektromotor. Ein derartiger Elektromotor kann als Gleichstrommotor ausgebildet und zum Pumpenantrieb vorgesehen sein. Allerdings kann das erfindungsgemäß angebrachte Anbauteil auch ein anderes Bauteil, wie z. B. ein Druckspeicher oder das Gehäuse einer Elektronikbaugruppe, sein.

Bevorzugt ist die formschlüssige Befestigung eine Verstemmung. Durch die Verstemmung oder Verclinchung wird auf einfache und kostengünstige Art und Weise eine besonders sichere Verbindung erreicht. Zur Vermeidung von zu hohen Verstemmkräften bei der Montage, ist die formschlüssige Befestigung im wesentlichen lokal an wenigstens einer Stelle ausgebildet. Durch die lokale Ausbildung der Verstemmung an einer Vielzahl von Stellen, insbesondere entlang des Umfanges des Anbauteils, kann insbesondere bei Anbauteilen mit relativ großem Außendurchmesser auf einfache Weise eine besonders sichere Verstemmung bei gleichzeitig geringem Kraft- und Kostenaufwand erzielt werden.

Will man auf einfachere Weise die für die Verstemmung notwendigen Vorsprünge erreichen, so empfiehlt sich in Weiterbildung der Erfindung die Merkmalskombination nach Anspruch 3. Dieses besonders vorteilhafte Prinzip besteht im wesentlichen darin, als Vorsprung ein oder mehrere parallel verlaufende Stege vorzusehen, die sich an der dem Anbauteil zugeordneten Fläche des Hydraulikblocks über die gesamte Fläche erstrecken. Die Stege können relativ hoch und schmal sein. Ist der Abstand der Stege so gewählt, daß sie tangential an den zur Befestigung dienenden Ansatz des Anbauteils reichen, so brauchen die Stege nur an dem Berührungspunkt zwischen Befestigungsansatz des Gehäuses und Steg lokal verstemmt zu werden. Man hat dann zwei sehr einfache Verstemmungspunkte, die für eine Befestigung ausreichen können, welche weniger stabil sein muß. Die parallelen Stege lassen sich wie weiter unten noch beschrieben gleichzeitig mit der Herstellung des Hydraulikblockgehäuses im Strangpreßverfahren fertigen bzw. anfügen.

Dabei können die Stege nach weiterer Bearbeitung auch noch eine umgekehrte L-Form besitzen, so daß der Befestigungsrand des Anbauteils schienenförmig seitlich eingeschoben und dann durch Verstemmen befestigt werden kann. Eine Bestückung des Hydraulikblocks in einer senkrecht zur Befestigungsfläche verlaufenden Richtung ist dann allerdings nicht mehr möglich.

Vielfach möchte man allerdings statt zwei Befestigungspunkten vier oder mehr Befestigungspunkte haben, über welche das Anbauteil mit Hydraulikblock verstemmt wird. In diesem Fall empfiehlt sich in Weiterbildung der Erfindung die Merkmalskombination nach Anspruch 13. Praktisch bedeutet dies, daß mindestens zwei vorzugsweise zueinander parallele Stege an das Blockgehäuse angeformt werden.

Da aber das Anbauteil nicht auf den Stegen, sondern in Höhe der Oberfläche der Befestigungsseite des Ventilblockes sitzen soll, müssen hier, wie weiter oben schon im Zusammenhang mit der Oberfläche des Ventilblocks beschrieben, entsprechend der Merkmalskombination nach Anspruch 13 in die Stege Ausnehmungen eingefügt werden, in die dann die abstehenden Vorsprünge bzw. Laschen des Anbauteils ragen. Die einzelnen eingefügten Ausnehmungen besitzen somit an die Ansätze angrenzende Wände, die mit den vorspringenden Laschen bzw. Ansätzen verstemmt werden können. Unter der Annahme, daß die Kontur des Anbauteils einen Kreisdurchmesser hat, können mit Hilfe einer einzigen Einsenkung entsprechender Durchmessergröße alle zur Verbindung dienenden Vorsprungswände gleichzeitig geschaffen werden. Die Einsenkung kann gleichzeitig für eine bearbeitete Oberfläche für das Aufsetzen des kreisförmigen Anbauteils dienen, sie kann sogar etwas tiefer als die Oberfläche der dem Anbauteil zugewandten Seite des Hydraulikblocks angeordnet sein, so daß sie gleichzeitig Dichtungszwecken dienen kann, wie weiter unten noch erläutert wird. Hat das Anbauteil eine rechteckige Kontur, so lassen sich schon mit zwei Stegen zwei parallele Linien mehrer hinteinanderliegender Verstemm- bzw. Verbindungspunkte erreichen.

Selbstverständlich ist es auch möglich, die für die Verbindung notwendigen Ausnehmungen durch ein entsprechendes Gußverfahren zu erreichen, durch welches der Hydraulikblock hergestellt wird. Durch Aufwendung entsprechender Kräfte und bei entsprechend weichem Material ist es auch möglich, eine hinreichend große Einsenkung mit geeignetem Durchmesser direkt in den Hydraulikblock einzupressen. In diesem Falle steht dann eine kreisförmig umlaufende Wand zur Verfügung, die an entsprechend gewählten lokalen Stellen zum Verstemmen des Befestigungsansatzes des in die Einsenkung eingefügten Blocks dienen kann.

Das Einfügen der Ausnehmung zur Befestigung wird man in der Regel vor dem Einbringen der Hydraulikkanäle in das Innere des Hydraulikblocks vornehmen.

Die Erfindung ist, wie eingangs schon erläutert, nicht nur für die Befestigung eines Elektromotors an einen Ventilblock, sondern auch anderer Baugruppen, wie beispielsweise Druckspeicher oder Reglergehäuse an einem Hydraulikblock geeignet. Allerdings wird das zu befestigende Gehäuse einer Elektronikeinheit in der Regel nicht aus einem festen Material, sondern aus Plastik gebildet sein, welches durch den Verstemmvorgang örtlich zerstört werden könnte. Verwendet man daher ein Plastikgehäuse für die Elektronikeinheit, so empfiehlt sich in Weiterbildung der Erfindung das in Anspruch 9 beschriebene Verfahren. Im Prinzip werden dabei an das Plastikgehäuse der elektronischen Steuerung Metallaschen oder ein umlaufender konsolenförmiger Ansatz aus Metall angegossen, der dann in der oben beschriebenen Weise mit dem Hydraulikblock verstemmt werden kann.

Regelmäßig wird man das Anbauteil an dem Hydraulikblock mit einer symmetrisch angeordneten Befestigung fixieren wollen. hierzu wird in Weiterbildung der Erfindung die Merkmalskombination nach Anspruch 13 empfohlen. Im Prinzip wird dabei durch eine eingefügte Ausnehmung in den Steg Raum für die Aufnahme des Anbauteils geschaffen. Zur Aufnahme des Anbauteils wird somit ein Teil eines Steges entfernt, so daß zwei an den Aufnahmeplatz des Anbauteils angrenzende Vorsprünge vom Steg übrig bleiben. Bei zwei parallelen Stegen sind es entsprechend vier Vorsprünge. Die Seitenkanten bzw. Seitenkante der Lasche bzw. Laschen werden an die Seitenwand des Steges bzw. der beiden parallelen Stege angelegt, so daß eine tangentiale Verstemmung der beiden einander radial gegenüberliegenden Laschen des Anbauteils erfolgen kann. Die Laschen wird man dabei so legen, daß sie in optimaler Weise auf das Anbauteil ausgeübte Kräfte aufzunehmen vermögen.

Ist das Anbauteil beispielsweise eine Radialkolbenpumpe mit zwei Radialkolben, so wird man die Laschen derart legen, daß die auf das Anbauteil ausgeübte Kraft möglichst in Längsrichtung der Laschen verläuft. Das ist die Richtung, in der die Stemmverbindung ohne Verformung des Anbauteils die größten Kräfte aufzunehmen vermag.

Die Erfindung, sowie weitere Merkmale, Ziele, Vorteile und Anwendungsmöglichkeiten derselben wird bzw. werden nachfolgend anhand der beigefügten Zeichnungen näher erläutert. Überall in den Zeichnungen bezeichnen dieselben Bezugszeichen dieselben oder entsprechende Elemente. Dabei bilden alle beschriebenen und/oder bildlich dargestellten Elemente für sich oder in beliebiger sinnvoller Kombination den Gegenstand der vorliegenden Erfindung, und zwar unabhängig von ihrer Zusammenfassung in den Ansprüchen oder deren Rückbeziehung. In den Zeichnungen zeigen:
- Fig. 1: die Seitenansicht eines mit zwei Stegen versehenen Ventilblocks, an dem ein Motor befestigt ist;
- Fig. 2: einen Schnitt durch den Befestigungsbereich gemäß Fig. 1 des Motors an dem Hydraulikblock;
- Fig. 3: die Draufsicht auf die Befestigung des Motors nach Fig. 1 mit einem ringförmigen Verstemmwerkzeug;
- Fig. 4: abschnittsweise die Draufsicht auf die Verbindung des Motors mit dem Ventilblock mittels eines oder mehrerer kreisförmiger Verstemmwerkzeuge;
- Fig. 5: in Seitenansicht einen mit dem Ventilblock verstemmten Motor;
- Fig. 6: die Motorbefestigung nach Fig. 5 in gegenüber Fig. 5 senkrechter Blickrichtung (Rückansicht);
- Fig. 7: in perspektivischer Darstellung die Befestigung des Motors nach Fig. 5 und 6 sowie die in analoger Weise vorgenommene Befestigung zweier Druckspeicher;
- Fig. 8: die Befestigung einer in ein Kunststoffgehäuse einer elektronischen Steuerung (ECU) eingegossenen Befestigungslasche durch Umbördeln;
- Fig. 9: die Befestigung der Lasche entsprechend Fig. 8 durch Verstemmen;
- Fig. 10: das Verstemmen gemäß Fig. 9 mit einem verstärkten Befestigungsansatz, der mit dem Reglergehäuse eine einstückige aus Kunststoff bestehende Einheit bildet;
- Fig. 11: ein weiteres Ausführungsbeispiel der vorliegenden Erfindung in einer Draufsicht;
- Fig. 12: eine Einzelheit aus Fig. 11 in geschnittener Seitenansicht; und
- Fig. 13: die Einzelheit aus Fig. 11 in einer Draufsicht.

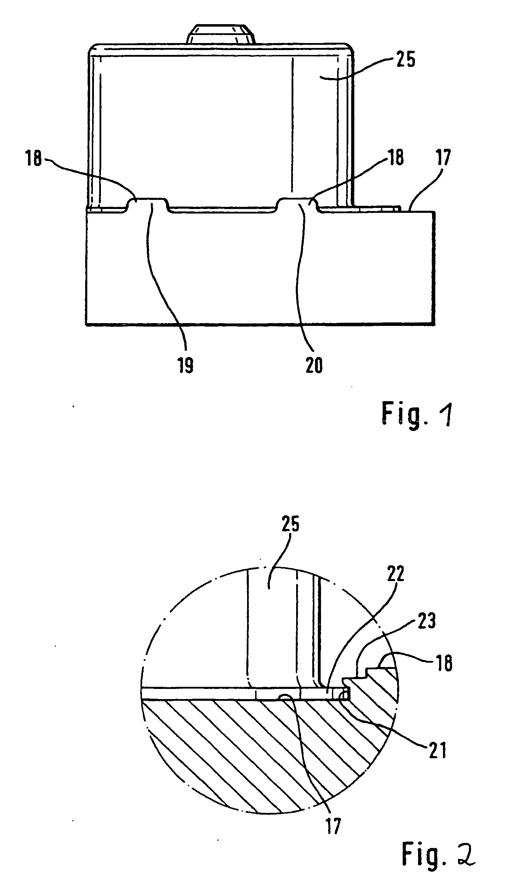

Fig. 1 und 2 zeigen in Seitenansicht bzw. vergrößerter Schnittansicht einer Einzelheit einen Motor 25, welcher auf die Befestigungsfläche 17 eines Ventilblocks 1 aufgesetzt und vorzugsweise mit diesem verstemmt ist. Zur Verstemmung an den Verbindungspunkten 23 dienen beispielsweise vier vom Ventilblock 1 abstehende Vorsprünge 18, welche gemäß einer bevorzugten Ausführungsform der vorliegenden Erfindung aus zwei ursprünglich durchgehenden Stegen 19, 20 durch eine darin eingebrachte Ausnehmung 21 herausgebildet sind. Die Ausnehmung 21 wird aus den ursprünglich durchgehenden Stegen 19, 20 beispielsweise durch ein kreisförmiges Fräswerkzeug herausgeschnitten, welches einen Durchmesser besitzt, der in etwa dem Durchmesser des zylinderförmigen Gehäuses des Motors 25 entspricht. Es ist aber nicht zwingend notwendig, daß die Ausnehmung 21 kreisförmig ausgebildet ist. Die Ausnehmung kann bei entsprechender Ausgestaltung des Fräswerkzeuges, beispielsweise unter Nutzung eines Kronenfräsers, auch ringförmig sein, soweit die Ausgestaltung des Motors 25 mit seinem Gehäuse ein glattes Aufsetzen auf den Boden der dann ringförmigen Ausnehmung zuläßt. Will man für eine besonders gute Abdichtung zwischen dem Motor 25 und dem Ventilblock 1 sorgen, so kann man die Ausnehmung 21 auch ein Stück weit in den Ventilblock 1 bzw. dessen Oberfläche 17 hineinführen (nicht gezeigt), so daß sich eine Ausnehmung 21 mit einer kreis- bzw. ringförmigen Seitenwand ergibt, die an den umlaufenden Befestigungsansatz 22 des Motors 25 angrenzt.

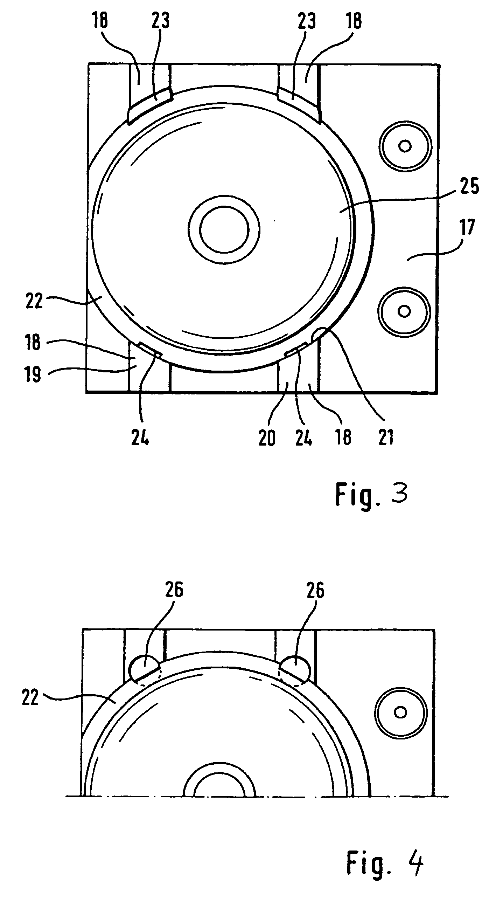

In Fig. 3 sind in einer Draufsicht die erfindungsgemäßen Verbindungspunkte 23 zu erkennen, die beispielsweise mittels Verstemmen durch Aufsetzen eines ringförmigen Stemmwerkzeugs auf die Vorsprünge 18 gebildet werden. Im unteren Teil der Fig. 3 ist der Zustand von Motor 25 und Ventilblock 1 vor dem Verstemmen zu sehen. Dabei erkennt man auch zwei Öffnungen bzw. Aussparungen 24 an dem umlaufenden Befestigungsansatz 22, in die beim Verstemmen Material des Ventilblocks 1 eingedrückt wird, was somit anschließend einer Drehbewegung des Motors 25 gegenüber dem Ventilblock 1 in der Ebene der Befestigungsfläche 17 in vorteilhafter Weise entgegensteht.

Der Hydraulik- bzw. Ventilblock 1 ist beispielsweise aus Aluminium und dabei bevorzugt im Strangpreßverfahren hergestellt, wodurch in vorteilhafter Weise während des Preßvorgangs gleichzeitig auch die in Ziehrichtung verlaufenden Stege 19, 20 ausgebildet werden können.

Während gemäß Fig. 3 die Verbindungspunkte 23 mittels eines ringförmigen Stemmwerkzeuges gebildet sind, wurden in Fig. 4 abschnittsweise die einzelnen Verbindungs- bzw. Verstemmpunkte 26 mittels mehrerer kreisförmiger Stempel mit kleinem Durchmesser gebildet, wobei jeder der Verstemmpunkte 26 mit einem separaten Stempel bzw. alle Verbindungspunkte 26 mit mehreren Stempeln gleichzeitig gebildet werden können. Die Kontur des entsprechenden Verstemmwerkzeuges ist in der Fig. 4 mit gestrichelten Linien angedeutet. Die Verbindungspunkte 26 überragen zur Befestigung den ringförmigen Befestigungsansatz 22 des Gehäuses, beispielsweise eines Motors 25 oder eines anderen, nicht dargestellten Anbauteils.

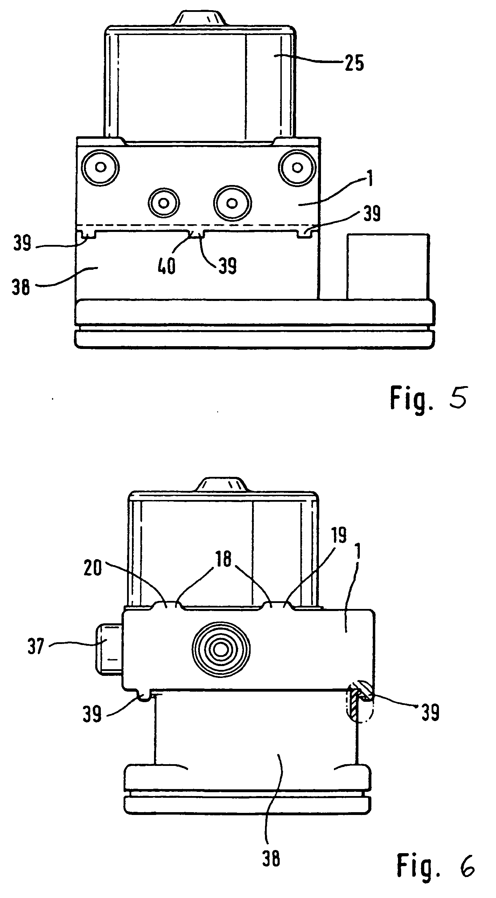

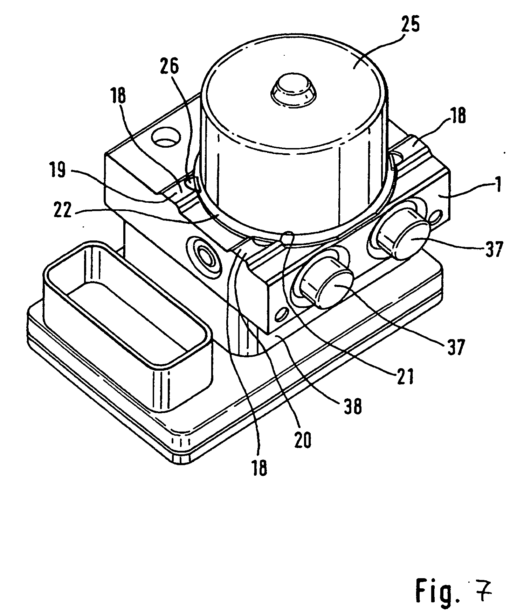

Die Fig. 5 bis 7 zeigen in einer Seiten-, einer Rück- und einer perspektivischen Ansicht den Hydraulikblock 1 mit aufgesetztem Elektromotor 25 und mit Stegen 19, 20, die durch Einfügen einer Ausnehmung 21 zu vier abstehenden Vorsprüngen 18 bearbeitet worden sind. Gemäß dem weiter oben beschriebenen Verfahren wurde der Befestigungsansatz 22 des Motors 25 erfindungsgemäß an den vier einzelnen Verbindungspunkten 26 mit dem Hydraulikblock 1 verstemmt. Abweichend zu den vorherigen Ausführungsbeispielen ist der Ventilblock 1 noch mit zwei Druckspeichern 37 versehen, die ebenfalls in der erfindungsgemäßen Art und Weise mit dem Ventilblock 1 verbunden sein können. In den Fig. 5 und 6 ist außerdem noch eine erfindungsgemäße Befestigung eines Reglergehäuses 38 am Ventilblock 1 mittels dreier Stege 40 und daraus gefertigter sechs Vorsprünge gezeigt, aus denen wie oben bereits erläutert mittels Umformvorgängen sechs einzelne, formschlüssige Verbindungspunkte 39 entstehen.

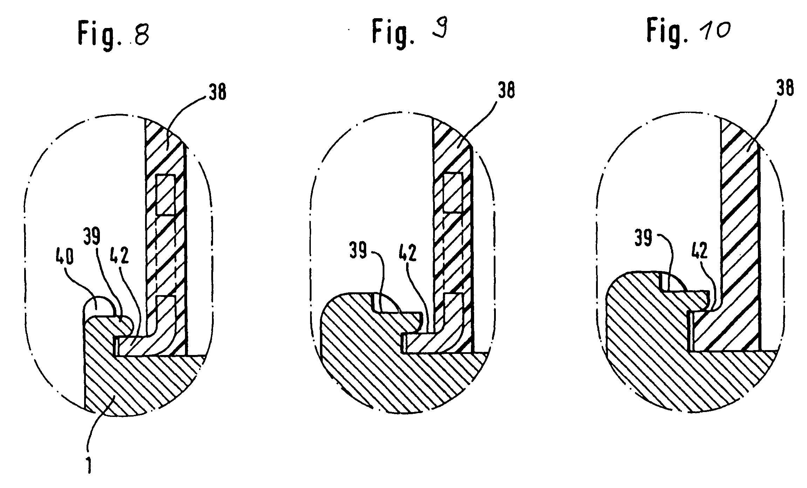

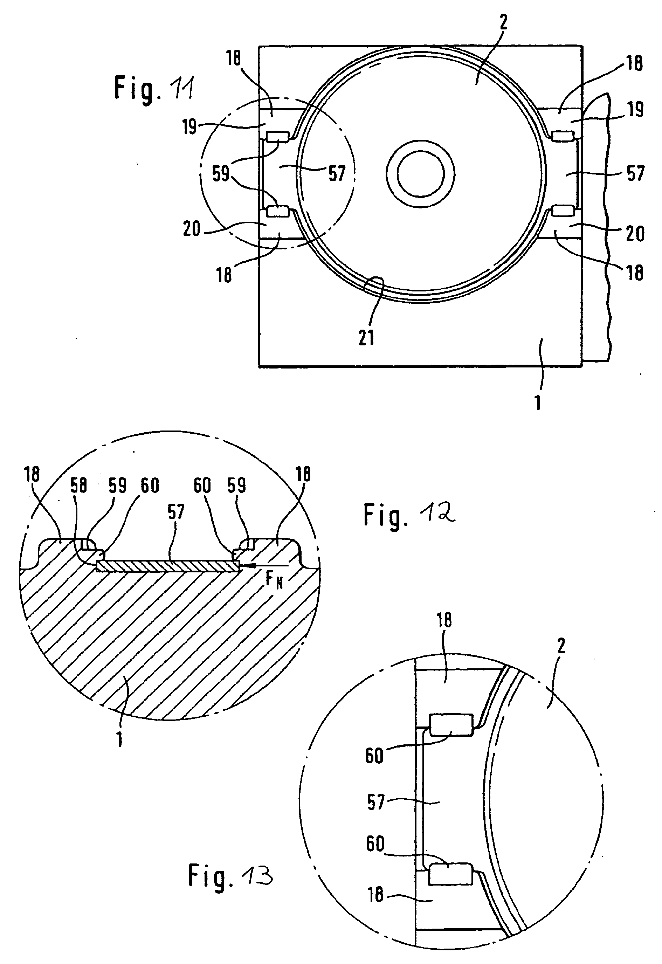

Die Fig. 8, 9 und 10 zeigen in vergrößerter Darstellung und um 180° gedreht mögliche Varianten der aus Fig. 6 bekannten Verbindung zwischen Hydraulikblock 1 und Reglergehäuse 38 am dort rechts gezeigten Verbindungspunkt 39. Dabei wird, wie aus Fig. 8 ersichtlich, entweder ein Steg 40 abschnittsweise oder zur Gänze um einen Befestigungsansatz 42 umgebördelt bzw. auf andere Weise kalt umgeformt. Oder es wird, wie aus Fig. 9 und 10 ersichtlich, über die gesamte Steglänge oder auch nur lokal verstemmt, so daß die einzelnen Verstemm- bzw. Verbindungspunkte 39 entstehen, die den Befestigungsansatz 42 des Reglergehäuses 38 halten. Der Befestigungsansatz 42 kann mit dem insbesondere aus Kunststoff bestehenden Gehäuse 38 einer Elektronikregelung (ECU) beispielsweise vergossen sein, z.B. durch ein Spritzgußverfahren. In Fig. 10 ist der Befestigungsansatz 42 hingegen einstückig mit dem Reglergehäuse 38 ausgebildet, welches dann aus einem zur Befestigung geeigneten Kunststoff besteht.

Bei der Ausführungsform nach den Fig. 11 bis 13 ist das Anbauteil 2 mit zwei vergrößerten Laschen 57 versehen, die radial von dem Anbauteil 2 am Hydraulikblock 1 anliegend abstehen. Der Hydraulik- bzw. Ventilblock 1 besitzt wieder, wie weiter oben schon beschrieben, zwei Stege 19, 20, die an den bevorzugt aus Aluminium bestehenden Hydraulikblock 1 beispielsweise durch Fließpressen angeformt sind. Die Seitenkanten 58 (siehe Fig. 12) der vergrößerten Laschen 57 grenzen im unmontierten Zustand an die Seitenwände der Stege 19,20 an, die wie weiter oben schon beschrieben, durch eine eingefügte Ausnehmung 21 in vier Vorsprünge 18 aufgeteilt sind. Die Verbindungs- bzw. Verstemmungspunkte 59 sind nun derart gesetzt, daß das verstemmte Material tangential zu der eingefügten Ausnehmung 21 bzw. der runden Bodenfläche des Anbauteils 2 verformt wird. Die durch die Verstemmung auftretenden Kräfte F_{N} wirken also somit radial auf die Seitenflächen 58 der vergrößerten Laschen 57. Und nicht wie bei den eingangs beschriebenen Ausführungsbeispielen, radial auf den umlaufenden unteren Rand des Anbauteils 2. Hierdurch werden Verformungen des Gehäuses des Anbauteils 2 weitgehend vermieden, da die Verstemmkräfte nur noch auf die Gehäuselasche 57 und nicht mehr auf das Gehäuse des Anbauteils 2 selbst wirken. Dieses Prinzip ist auch bei Verwendung nur eines einzigen Steges mit zwei Vorsprüngen und der eingefügten Ausnehmung 21, aber auch bei entsprechender Ausformung der Laschen 57 auch mit nur einem Steg anwendbar. Dabei kann der Steg beispielsweise seitlich versetzt am Gehäuse des Anbauteils 2 angebracht sein oder aber die beiden Laschen 57 besitzen eine gabelförmige Ausnehmung, deren innere Seitenflächen an den Außenflächen des Steges anliegen. In diesem Fall ist allerdings eine eingefügte Ausnehmung 21 notwendig.

Fig. 12 zeigt einen vergrößerten Schnitt durch den Hydraulikblock 1 in Höhe der Lasche 57 und der Verbindungspunkte 59, während Fig. 13 eine vergrößerte Draufsicht auf diesen Bereich zeigt, wobei der vergrößerte Bereich in Fig. 11 als Kreis dargestellt ist.

Die Erfindung wurde zuvor anhand von bevorzugten Ausführungsbeispielen näher erläutert. Für einen Fachmann ist es jedoch offensichtlich, daß unterschiedliche Abwandlungen und Modifikationen gemacht werden können, ohne den der Erfindung zugrundeliegenden Gedanken zu verlassen. Insbesondere wird von der Erfindung auch eine Variante umfaßt, in welcher das Anbauteil 2 in den Ventilblock 1 "eintaucht" und danach verstemmt wird. Dazu ist insbesondere vorgesehen, daß in dem Ventilblock 1 eine Ausnehmung ausgebildet ist, deren Innendurchmesser dem Außendurchmesser des Anbauteils 1 im wesentlichen entspricht. Dabei ist bevorzugt die Aufnahme des Ventilblocks 1 um die Eintauchtiefe entsprechend dicker ausgebildet.

## Patentansprüche

1. Hydraulikblock (1), insbesondere Ventilblock für eine schlupfgeregelte Bremsanlage eines Fahrzeuges, an welchem wenigstens ein Anbauteil (2), insbesondere ein Elektromotor (25), formschlüssig befestigt ist, **dadurch gekennzeichnet, daß** eine dem Anbauteil (2) zugewandte Fläche (17) des Hydraulikblocks (1) mit mindestens einem, im wesentlichen senkrecht dazu abstehenden Vorsprung (18) versehen ist, an den ein, sich vorzugsweise radial erstreckender, Befestigungsansatz (22) des Gehäuses des Anbauteils (2) reicht, und daß das, an den Ansatz (22) angrenzende, Material des Vorsprungs (18) durch eine Verstemm- und/oder Clinchverbindung das Anbauteil (2) mit dem Hydraulikblock (1) verbindet.

2. Hydraulikblock nach Anspruch 1, **dadurch gekennzeichnet, daß** die Befestigung des Anbauteils (2) an einem oder mehreren einzelnen Verbindungspunkten (23, 26, 39, 59) vorgesehen ist.

3. Hydraulikblock (1) nach Anspruch 1, **dadurch gekennzeichnet, daß** der abstehende Vorsprung (18) durch einen oder mehrere parallele Stege (19, 20) auf der Fläche (17) des Hydraulikblocks (1) gebildet ist.

4. Hydraulikblock (1) nach Anspruch 3, **dadurch gekennzeichnet, daß** eine dem Ansatz (22) zugewandte Wand des Vorsprungs (18) durch eine in die Stege (19, 20) eingefügte Ausnehmung (21) gebildet ist.

5. Hydraulikblock (1) nach einem der Ansprüche 3 oder 4, **dadurch gekennzeichnet, daß** die Stege (19, 20) aus dem gleichen Werkstoff wie der Hydraulikblock (1), vorzugsweise aus Aluminiumwerkstoff, und durch Strangpressen ausgebildet sind.

6. Hydraulikblock (1) nach Anspruch 4, **dadurch gekennzeichnet, daß** die eingefügte Ausnehmung (21) durch spanlose oder spanabhebende Bearbeitung der Stege (19, 20) gebildet ist.

7. Hydraulikblock (1) nach Anspruch 1, **dadurch gekennzeichnet, daß** der Ansatz (22) bzw. eine Lasche (31) mit mindestens einer Aussparung (24,32) versehen ist, in die bei dem Verstemm- bzw. Clinchvorgang verschobenes Material des Hydraulikblocks (1) eingefügt ist.

8. Hydraulikblock (1) nach Anspruch 7, **dadurch gekennzeichnet, daß** die Aussparung (32) den Vorsprung (18) zumindest abschnittsweise umfaßt.

9. Hydraulikblock (1) nach Anspruch 1, **dadurch gekennzeichnet, daß** das Anbauteil (2, 38) ein Gehäuse aus Kunststoff aufweist und ein Befestigungsansatz (42) mit dem Gehäuse durch Umgießen bzw. Umspritzen verbunden ist.

10. Hydraulikblock (1) nach einem der Ansprüche 3 bis 6, **dadurch gekennzeichnet, daß** der Hydraulikblock (1) mit mindestens einem Steg (19, 20) versehen ist, daß das Anbauteil (2) mit mindestens einer Befestigungslasche (31) versehen ist, deren Seitenkante (58) benachbart zu der Seitenwand des Steges (19, 20) verläuft, und daß die Lasche (31) derart mit dem Steg (19, 20) verstemmt ist, daß das zu verstemmende Material sich senkrecht zur Erstreckungsrichtung des Steges (19, 20) verschiebt.

11. Hydraulikblock (1) nach Anspruch 10, **dadurch gekennzeichnet, daß** der Steg (19,20) durch eine eingefügte Ausnehmung (21) in zwei Vorsprünge (18) unterteilt ist, daß das Anbauteil (2) mit zwei Laschen (57) versehen ist, und daß die Laschen (57) mit den Vorsprüngen (18) derart verstemmt sind, daß sich das verstemmte Material (60) quer zur Erstreckungsrichtung des Steges (19, 20) verschiebt.

12. Hydraulikblock nach Anspruch 11, **dadurch gekennzeichnet, daß** zwei parallele Stege (19, 20) vorgesehen sind und daß die Lasche (57) an beiden seitlichen Rändern verstemmt ist.

13. Hydraulikblock nach Anspruch 10, **dadurch gekennzeichnet, daß** die zwei Stege (19, 20) durch eingefügte Ausnehmungen (21) in vier Vorsprünge unterteilt sind und daß das Anbauteil (2) mit zwei miteinander fluchtenden Laschen (57) versehen ist, deren vier Seitenränder mit den vier Vorsprüngen derart verstemmt sind, daß der Materialfluß der Verstemmung quer zur Erstreckungsrichtung der Stege (19, 20) bzw. Laschen (57) verläuft.

14. Verfahren zur Befestigung eines Anbauteils (2) an einem Hydraulikblock (1), vorzugsweise Ventilblock, wobei die Befestigung des Anbauteils (2) am Ventilblock (1) formschlüssig ausgebildet wird, **dadurch gekennzeichnet, daß** die Befestigung an einem oder mehreren einzelnen Verbindungspunkten (23, 26, 39, 59) vorgesehen wird, indem an der dem Anbauteil (2) zugewandten Fläche (17) zumindest ein senkrecht zu dieser stehender Steg (19, 20) aus dem Material des Hydraulikblocks (1) ausgebildet ist, daß das Anbauteil (2) so auf der Fläche (17) plaziert wird, daß ein zugeordneter Befestigungsansatz (22) des Anbauteils (2) an den Steg (19, 20) angrenzt, und durch spanlose Verformung des Steges (19, 20) und/oder des Befestigungsansatzes (22) das Anbauteil (2) auf dem Hydraulikblock (1) gehalten ist.

## Claims

1. Hydraulic block (1), in particular a valve block for a slip-controlled brake system in a motor vehicle, to which at least one add-on piece (2), in particular an electric motor (25), is secured in a positive fit, **characterized in that** a surface (17) of the hydraulic block (1) facing the add-on piece (2) includes at least one projection (18) which protrudes substantially perpendicular to it, reaching up to which projection is a preferably radially extending adjoint securing piece (22) of the housing of the add-on-piece (2), and **in that** the material of the projection (18) which is adjacent to the adjoint securing piece (22) secures the add-on piece (2) to the hydraulic block (1) by way of a wedged and/or clinched connection.

2. Hydraulic block according to claim 1, **characterized in that** the add-on piece (2) is secured at one or several individual connecting points (23, 26, 39, 59).

3. Hydraulic block (1) according to claim 1, **characterized in that** the protruding projection (18) is formed by one or several parallel webs (19, 20) on the surface (17) of the hydraulic block (1).

4. Hydraulic block (1) according to claim 3, **characterized in that** a wall of the projection (18) facing the adjoint securing piece (22) is formed by a recess (21) inset in the webs (19, 20).

5. Hydraulic block (1) according to one of claims 3 or 4, **characterized in that** the webs (19, 20) are made of the same material as the hydraulic block (1), preferably aluminum, and are formed by means of extrusion.

6. Hydraulic block (1) according to claim 4, **characterized in that** the inset recess (21) is formed on the webs (19, 20) by non-cutting or cutting working.

7. Hydraulic block (1) according to claim 1, **characterized in that** the adjoint securing piece (22) or a strap (31) is provided with at least one hollow (24, 32), into which material pressed from the hydraulic block (1) is inserted during the wedging or clinching operation.

8. Hydraulic block (1) according to claim 7, **characterized in that** the hollow (32) encompasses the projection (18) at least in sections.

9. Hydraulic block (1) according to claim 1, **characterized in that** the add-on piece (2, 38) has a housing made of plastic, and an adjoint securing piece (42) is connected to the housing by means of casting or extrusion.

10. Hydraulic block (1) according to any one of claims 3 to 6, **characterized in that** the hydraulic block (1) is provided with at least one web (19, 20), that the add-on piece (2) is provided with at least one securing strap (31), whose side edge (58) extends adjacent to the side wall of the web (19, 20), and **in that** the strap (31) is wedged in such a way with the web (19, 20) that the material to be wedged is shifted vertically in relation to the direction of extension of the web (19, 20).

11. Hydraulic block (1) according to claim 10, **characterized in that** the web (19, 20) is divided into two projections (18) by an inset recess (21), that the add-on piece (2) is provided with two straps (57), and **in that** the straps (57) are wedged with the projections (18) in such a way that the material to be wedged (60) is shifted transversely to the direction of extension of the web (19, 20).

12. Hydraulic block according to claim 11, **characterized in that** two parallel webs (19, 20) are provided, and **in that** the strap (57) is wedged at both lateral edges.

13. Hydraulic block according to claim 10, **characterized in that** the two webs (19, 20) are divided into four projections by inset recesses (21), and **in that** the add-on piece (2) is provided with two aligned straps (57), whose four lateral edges are wedged with the four projections in such a way that the material flow of the wedge extends transversely to the direction of extension of the webs (19, 20) or straps (57), respectively.

14. Method for securing an add-on piece (2) to a hydraulic block (1), preferably a valve block, with the add-on piece (2) being secured to the hydraulic block (1) in a positive fit, **characterized in that** the attachment is provided at one or several individual connecting points (23, 26, 39, 59) because at least one web (19, 20) is formed from the material of the hydraulic block (1) on the surface (17) facing the add-on piece (2) and is perpendicular to this surface, **in that** the add-on piece (2) is placed on the surface (17) in such a way that an associated adjoint securing piece (22) of the add-on piece (2) is adjacent to the web (19, 20), and the add-on piece (2) is held in place on the hydraulic block (1) by non-cutting forming of the web (19, 20) and/or the adjoint securing piece (22).

## Revendications

1. Bloc hydraulique (1), en particulier un bloc-vannes pour un système de freinage à régulation antipatinage d'un véhicule, sur lequel est fixé au moins un élément rapporté (2), en particulier un moteur électrique (25), par engagement positif,
**caractérisé en ce qu'**une surface (17) du bloc hydraulique (1), qui est tournée vers l'élément rapporté (2), est pourvue d'au moins un bossage (18) saillant essentiellement perpendiculairement à celle-ci, et vers lequel s'étend un rebord de fixation (22) du boîtier de l'élément rapporté (2) s'étendant de préférence radialement, et **en ce que** la matière du bossage (18) adjacente au rebord (22) relie l'élément rapporté (2) au bloc hydraulique (1) grâce à une opération de matage et/ou de sertissage.

2. Bloc hydraulique selon la revendication 1, **caractérisé en ce qu'**il est prévu la fixation de l'élément rapporté (2) par un ou plusieurs points de liaison individuels (23, 26, 39, 59).

3. Bloc hydraulique (1) selon la revendication 1, **caractérisé en ce que** le bossage proéminent (18) est constitué par une ou plusieurs nervure(s) parallèle(s) (19, 20) formées sur la surface (17) du bloc hydraulique (1).

4. Bloc hydraulique (1) selon la revendication 3, **caractérisé en ce qu'**une paroi du bossage (18) qui est tournée vers le rebord (22) est formée par l'aménagement d'un évidement (21) creusé dans les nervures (19, 20).

5. Bloc hydraulique (1) selon l'une des revendications 3 ou 4, **caractérisé en ce que** les nervures (19, 20) sont constituées de la même matière que le bloc hydraulique (1), de préférence en une matière d'aluminium, et sont formées par extrusion.

6. Bloc hydraulique (1) selon la revendication 4, **caractérisé en ce que** l'évidement creusé (21) est façonné par usinage sans enlèvement de copeaux ou par usinage avec enlèvement de copeaux des nervures (19, 20).

7. Bloc hydraulique (1) selon la revendication 1, **caractérisé en ce que** le rebord (22) ou une patte (31) est pourvu(e) d'au moins un évidement (24, 32) dans lequel s'engage de la matière du bloc hydraulique (1), qui est refoulée lors de l'opération de matage ou sertissage.

8. Bloc hydraulique (1) selon la revendication 7, **caractérisé en ce que** l'évidement (32) englobe, par sections au moins, le bossage (18).

9. Bloc hydraulique (1) selon la revendication 1, **caractérisé en ce que** l'élément rapporté (2, 38) comporte un boîtier en matière plastique, et qu'un rebord de fixation (42) est incorporé dans le boîtier par surmoulage ou surmoulage par injection.

10. Bloc hydraulique (1) selon l'une des revendications 3 à 6, **caractérisé en ce que** le bloc hydraulique (1) est pourvu d'au moins une nervure (19, 20), que l'élément rapporté (2) est pourvu d'au moins une patte de fixation (31), dont le bord latéral (58) est adjacent à la paroi latérale de la nervure (19, 20), et que la patte (31) est sertie dans la nervure (19, 20) de manière telle que la matière matée flue perpendiculairement au sens d'orientation de la nervure (19, 20).

11. Bloc hydraulique (1) selon la revendication 10, **caractérisé en ce que** la nervure (19, 20) est divisée en deux bossages (18) par un évidement creusé (21), que l'élément rapporté (2) est pourvu de deux pattes (57), et que les pattes (57) sont serties dans les bossages (18) de manière telle que la matière matée (60) flue transversalement au sens d'orientation de la nervure (19, 20).

12. Bloc hydraulique selon la revendication 11, **caractérisé en ce que** deux nervures parallèles (19, 20) sont prévues, et que la patte (57) est sertie par ses deux bords latéraux.

13. Bloc hydraulique selon la revendication 10, **caractérisé en ce que** les deux nervures (19, 20) sont divisées, par un évidement creusé (21), en quatre bossages, et que l'élément rapporté (2) est pourvu de deux pattes (57) alignées l'une sur l'autre, dont les quatre bords latéraux sont sertis dans les quatre bossages de manière telle que le fluage de la matière du sertissage s'étende transversalement au sens d'orientation des nervures (19, 20) ou des pattes (57).

14. Procédé de fixation d'un élément rapporté (2) sur un bloc hydraulique (1), de préférence un bloc-vannes, où la fixation de l'élément rapporté (2) sur le bloc-vannes (1) est configurée en fixation par engagement positif,
**caractérisé en ce que** la fixation est prévue par un ou plusieurs point(s) de liaison (23, 26, 39, 59), **en ce qu'**au moins une nervure (19, 20) s'étendant perpendiculairement à la surface (17) tournée vers l'élément rapporté (2) est prévue sur celle-ci, qui est constituée de la même matière que le bloc hydraulique (1), **en ce que** l'élément rapporté (2) est positionné sur la surface (17) de telle manière qu'un rebord de fixation (22) de l'élément rapporté (2), qui lui est associé, soit adjacent à la nervure (19, 20), et **en ce que** l'élément rapporté (2) est retenu sur le bloc hydraulique (1) par formage sans enlèvement de copeaux de la nervure (19, 20) et/ou du rebord de fixation (22).
